# EUROPÄISCHE PATENTSCHRIFT

(11) **EP 0 551 161 B1**
(45) Veröffentlichungstag und Bekanntmachung des Hinweises auf die Patenterteilung: **09.04.1997**
(21) Anmeldenummer: 93200048.2
(22) Anmeldetag: 08.01.1993
(51) Int. Cl.: A01C 23/02

(54) **Vorrichtung zum Einbringen von Flüssigdünger in den Boden**
Device to inject liquid manure into the soil
Dispositif pour injecter du lisier dans le sol

(30) Priorität: 08.01.1992 NL 9200021
(43) Veröffentlichungstag der Anmeldung: 14.07.1993
(73) Patentinhaber: Schuitemaker Machines B.V., NL-7461 AG Rijssen (NL)
(72) Erfinder: Sanderink, Johannes Gerhardus, NL-7482 ES Haaksbergen (NL); Schuitemaker, Johan, NL-7461 AS Rijssen (NL); Kloosterhuis, Jan Harm, NL-7462 CR Rijssen (NL); Berkhof, Marinus Hendrik, NL-3931 KN Woudenberg (NL)
(74) Vertreter: Smulders, Theodorus A.H.J., Ir.

(56) Entgegenhaltungen:
- EP-A- 0 322 941
- EP-A- 0 406 939
- EP-A- 0 438 187
- DE-A- 4 021 266
- GB-A- 1 500 179
- US-A- 3 529 852

## Beschreibung

Die Erfindung betrifft eine Vorrichtung zum Einbringen von Flüssigdünger in den Boden, versehen mit einem Gestell, das eine Anzahl im wesentlichen parallel angeordneter Scheiben umfasst, die im Betrieb Schlitze im Boden bilden, sowie hinter jede Scheibe montierte Düngereinbringmittel, die im Betrieb Flüssigdünger in die durch die Scheiben gebildeten Schlitze einbringen, wobei das Gestell eine Anzahl, sich im wesentlichen parallel zueinander rückwärts erstreckender Hilfsrahmen trägt, die je mindestens eine Scheibe und dahinten montierten Düngereinbringmittel tragen.

Solche Vorrichtungen sind schon sowohl aus der Praxis als aus EP-A-406939 und EP-A-438187 bekannt und werden insbesondere für Sodendüngung verwendet. Die bekannten Vorrichtungen umfassen ein Gestell, das fest an einen mit einem Radsatz versehenen Vorratsbehälter montiert ist. Der Vorratsbehälter kann wieder hinter einen Schlepper gekuppelt werden. Das Gestell trägt einen Verteiler, der durch eine Zuführleitung mit dem Vorratsbehälter verbunden ist und weiter mit zu den Düngereinbringmitteln führenden Schläuchen versehen ist, die im Betrieb den einzubringenden Dünger den einzelnen, mit den einzelnen Scheiben zusammenwirkenden Düngereinbringmitteln zuführen.

Das Gestell umfasst einen sich quer zur Fortbewegungsrichtung erstreckenden Hauptbalken, der eine Anzahl rückwärts verlaufender Hilfsrahmen trägt, die je mindestens eine Scheibe tragen. In der Praxis trägt jeder Hilfsrahmen manchmal zwei auf beiden Seiten des Hilfsrahmens montierte Scheiben sowie die zugehörigen Düngereinbringmittel und Tiefeneinstellorgane.

Im Betrieb wird der Düngervorratsbehälter, versehen mit einer Düngereinbringvorrichtung, über das zu düngende Gelände, das z.B. Grasland sein kann, von einem Schlepper gezogen. Die Scheiben bilden dabei Schlitze im Boden mit einer durch die Tiefeneinstellorgane bestimmten Tiefe. Hinter den Scheiben wird mittels der Düngereinbringmittel Flüssigdünger in die gebildeten Schlitze eingebracht. Die Düngereinbringmittel umfassen oft, wie z.B. in EP-A-0483187, ein Düngerkolter mit einem hohlen hinteren Ende. Das vordere Ende des Düngerkolters hält den durch eine Scheibe gebildeten Schlitz offen und/oder erweitert den Schlitz. Der Dünger wird durch das hohle hintere Ende, das an einen Düngerzuführschlauch angeschlossen ist, in den Schlitz eingebracht.

Hinter die Düngereinbringmittel können, wie gezeigt in EP-A- 483187 und EP-A-406939, noch Räder oder Rollen od. dgl. montiert sein, die die Schlitze wieder zudrücken.

Ein Nachteil der bekannten Vorrichtungen zum Einbringen von Flüssigdünger in den Boden ist, dass diese bekannten Vorrichtungen ziemlich kompliziert und dadurch verhältnismässig teuer sind. Auch eignen sich die bekannten Vorrichtungen nur zum Einsatz in einer beschränkten Anzahl Bodenarten und/oder Witterungsverhältnissen. Aufgabe der Erfindung ist es, eine verbesserte Düngereinbringvorrichtung zur Verfügung zu stellen, für die die obengenannten Nachteile nicht oder wenigstens in verringertem Masse gelten. Insbesondere ist es Aufgabe der Erfindung, eine zweckmässige, verhältnismässig einfache und universell einsetzbare Vorrichtung zum Einbringen von Flüssigdünger in den Boden zur Verfügung zu stellen. Dazu wird nach der Erfindung eine Vorrichtung der oben beschriebenen Art dadurch gekennzeichnet, dass die Hilfsrahmen im wesentlichen aus einer oder mehreren sich vom Gestell rückwärts erstreckenden Blattfedern bestehen, auf die Mittel zum Befestigen einer oder mehrerer Scheiben und Düngereinbringmittel montiert sind.

Im folgenden wird die Erfindung unter Bezugnahme auf die beigefügte Zeichnung einiger Ausführungsbeispiele näher beschrieben. Es zeigen:
Fig. 1 schematisch in Seitenansicht einen Teil einer bekannten Düngereinbringvorrichtung;
Fig. 2, 3 und 4 schematisch in Seiten-, Hinter- bzw. Unteransicht ein Beispiel einer Vorrichtung gemäß der Erfindung;
Fig. 5 schematisch eine Variante eines Teiles der in Fig. 2 gezeigten Konstruktion;
Fig. 6 schematisch eine Umbaumöglichkeit für die Vorrichtung nach Fig. 2 bis 4;
Fig. 7 und 8 schematisch in Seitenansicht ein Ausführungsbeispiel einer Düngereinbringvorrichtung mit einem umkehrbaren Schwanzstück;
Fig. 9 zwei verschiedene Scheiben, die bei einer Vorrichtung gemäß der Erfindung anwendbar sind; und
Fig. 10 schematisch eine Variante der Fig. 5.

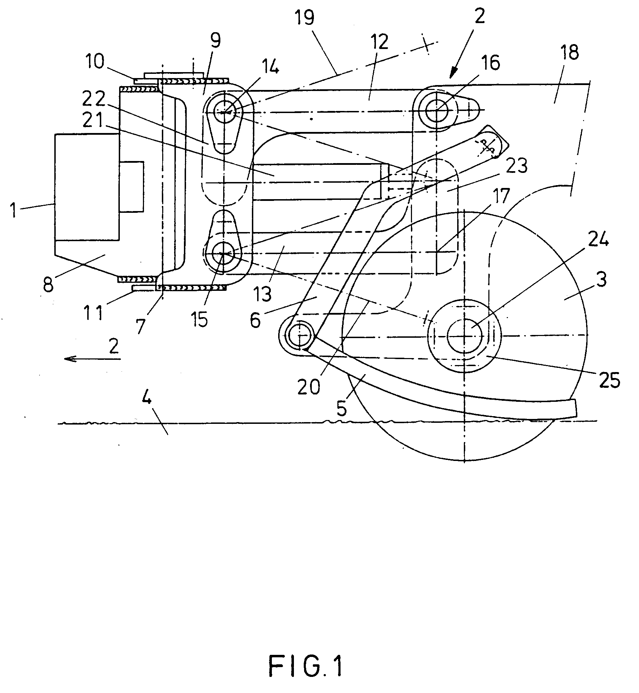

Fig. 1 zeigt schematisch in Seitenansicht einen Teil einer bekannten Vorrichtung zum Einbringen von Flüssigdünger oder von verflüssigtem Dünger in den Boden. Jetzt wird schon bemerkt, daß sowohl eine bekannte Vorrichtung als auch eine Vorrichtung gemäß der Erfindung auf Wunsch auch eingesetzt werden könnte, um andere Stoffe als Dünger in den Boden einzubringen. Beispielsweise kann man an Gewächsschutzmittel denken. Die in Fig. 1 gezeigte Vorrichtung umfaßt einen Hauptbalken 1, der sich quer zu der mit einem Pfeil P angegebenen Fortbewegungsrichtung erstreckt. Der Hauptbalken 1 ist fest am einen nicht näher gezeigten Vorratsbehälter und/oder am Chassis des Vorratsbehälters befestigt. Das Chassis des Vorratsbehälters ist mit Rädern und weiter an der Vorderseite mit üblichen Mitteln zum Kuppeln des Chassis an einen Schlepper versehen.

Der Hauptbalken 1 trägt eine Anzahl nebeneinander montierter, sich rückwärts erstreckender Hilfsrahmen 2, von denen nur einer in der Figur sichtbar ist.

Die Hilfsrahmen tragen wieder je mindestens eine Scheibe 3, die quer zum Hauptbalken 1 orientiert ist. Normalerweise trägt jeder Hilfsrahmen zwei Scheiben, d.h. an jeder der Längsseiten eine Scheibe, aber notwendig ist das nicht. Der Hauptbalken 1 kann noch (nicht gezeigte) aufklappbare Endabschnitte haben, die ebenfalls mit einer Anzahl Hilfsrahmen mit Scheiben versehen sind.

Die Scheiben 3 bilden im Betrieb Schlitze im Boden 4 bis zu einer durch Tiefeneinstellorgane 5, 6 einstellbaren Tiefe.

Jeder Hilfsrahmen 2 ist um eine vertikale Achse 7 gelenkig an einer mit dem Hauptbalken 1 verschweißten Stütze 8 befestigt. Jeder Hilfsrahmen umfaßt dazu ein Kupplungsstück 9 mit einem an der Ober- und Unterseite vorstehenden Flansch 10 bzw. 11. Die Flansche 10 und 11 umgreifen die Stütze 8 und sind mit dieser gelenkig um die im wesentlichen vertikale Achse 7 verbunden.

Das Kupplungsstück 9 trägt weiter zwei sich im wesentlichen parallel rückwärts erstreckende (Doppel-)Arme 12, 13, die je um eine im wesentlichen horizontale Achse 14, 15 gelenkig mit dem Kupplungsstück verbunden sind. Die Arme 12, 13 sind je mit den vom Kupplungsstück abgewandten Enden um eine im wesentlichen horizontale Achse 16, 17 gelenkig mit einem Scheibenträger 18 verbunden. Die Arme 12, 13 bilden eine Parallelogrammkonstruktion, die es ermöglicht, daß der Scheibenträger zwischen den mit unterbrochenen Linien 19 und 20 angegebenen äußersten Stellungen vertikal auf und nieder bewegt wird, ohne daß fürs übrige die Stellung des Scheibenträgers sich ändert. Der Scheibenträger kann gehoben oder gesenkt werden mit Hilfe eines hydraulischen Zylinders 21, der in diesem Beispiel zwischen einem vorderen, abwärts verlaufenden Vorsprung 22 des oberen Armes 12 und einem hinteren, aufwärts verlaufenden Vorsprung 23 des unteren Armes verbunden ist.

Der Scheibenträger ist mit mindestens einer Achse 24 versehen, auf die die Scheibe 3 mittels einer Nabe 25 montiert ist. Der Scheibenträger hat weiter ein in Fig. 1 nicht gezeigtes Schwanzstück, das die Düngereinbringmittel trägt, die den durch einen Schlauch aus einem Verteiler zugeführten Dünger in den durch eine Scheibe im Boden gebildeten Schlitz einbringen. Das Schwanzstück ist weiter gegebenenfalls mit Rädern oder Rollen versehen, die die mit Dünger versehenen Schlitze wieder zudrücken.

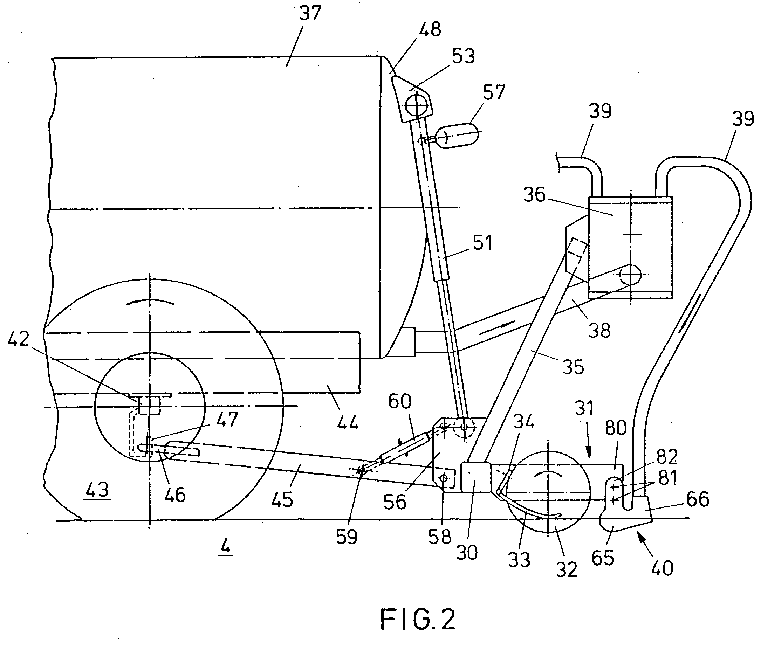

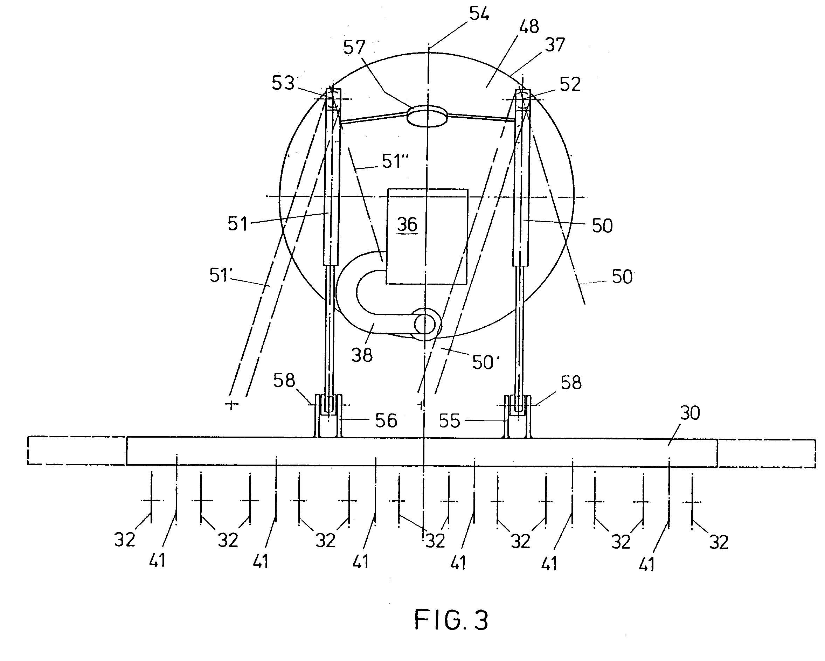

Fig. 2 bis 4 zeigen in Seiten-, Hinter- und Unteransicht ein Ausführungsbeispiel einer Düngereinbringvorrichtung gemäß der Erfindung. Die gezeigte Vorrichtung umfaßt ebenso wie die in Fig. 1 gezeigte bekannte Vorrichtung einen sich quer zur Fortbewegungsrichtung erstreckenden Hauptbalken 30, der eine Anzahl sich rückwärts erstreckender und im wesentlichen parallel zueinander verlaufender Hilfsrahmen 31 trägt, die je wieder mindestens eine Scheibe 32 tragen. Fig. 3 zeigt mittels Mittellinien schematisch bei 41 sechs Hilfsrahmen mit je zwei Scheiben 32.

Weiter sind wieder Tiefeneinstellorgane 33, 34 vorgesehen, die in ähnlicher Weise wie die in Fig. 1 gezeigten Organe 5, 6 ausgeführt sein können. Der Hauptbalken 30 ist mit einem aufwärts verlaufenden Rahmenabschnitt 35 versehen, die einen an sich bekannten Verteiler 36 trägt. Der Verteiler ist durch einen Düngerzuführschlauch 38 mit einem Düngervorratsbehälter 37 verbunden und ist durch eine Anzahl Schläuche, von denen in Fig. 2 nur zwei bei 39 gezeigt sind, mit den Düngereinbringmitteln verbunden, die im Betrieb den Dünger in die durch die Scheiben 32 gebildeten Schlitze einbringen. Zum Versorgen des Verteilers mit dem Dünger kann eine Pumpe vorgesehen sein. Die Düngereinbringmittel werden im folgenden noch detaillierter beschrieben. Geeignete Düngereinbringmittel sind in Fig. 2 mit 40 angegeben.

Der Behälter 37 ist in üblicher Weise auf einen mit mindestens einer Radachse 42 und Rädern 43 versehenen Hilfsrahmen 44 montiert, der an der Vorderseite in nicht gezeigter, üblicher Weise an einen Schlepper gekuppelt werden kann. Der Hauptbalken 30 der Düngereinbringvorrichtung ist jedoch nicht fest auf das Untergestell 44 montiert, sondern ist gemäß der Erfindung durch einen Zugbaum 45, die mit einer Zugöse 46 versehen ist, lösbar mit dem Untergestell 44 des Behälters 37 gekuppelt. Im gezeigten Beispiel ist dazu die Radachse 42 mit einem durch die Zugöse 46 verlaufenden Bolzen 47 versehen.

Der Hauptbalken 30 erstreckt sich im Prinzip im wesentlichen parallel zur Radachse 42, aber die Zugöse bietet eine hinreichende Möglichkeit, eine von der parallelen Lage abweichende Lage einzunehmen, wenn über ein unebnes Gelände geradeaus gefahren wird. Weiter macht die Zugöse es natürlich möglich, Kurven zu nehmen, ohne daß die Düngereinbringvorrichtung gehoben wird. Die bei der bekannten Vorrichtung eingesetzte, um die in Fig. 1 angegebene vertikale Achse 7 gelenkige Befestigung des Hilfsrahmens am Hauptbalken ist durch die Anwendung der Zugöse 46 nicht mehr notwendig. Die Hilfsrahmen 31 sind daher in der in Fig. 2 bis 4 gezeigten Vorrichtung drehfest am Hauptbalken 30 angeordnet.

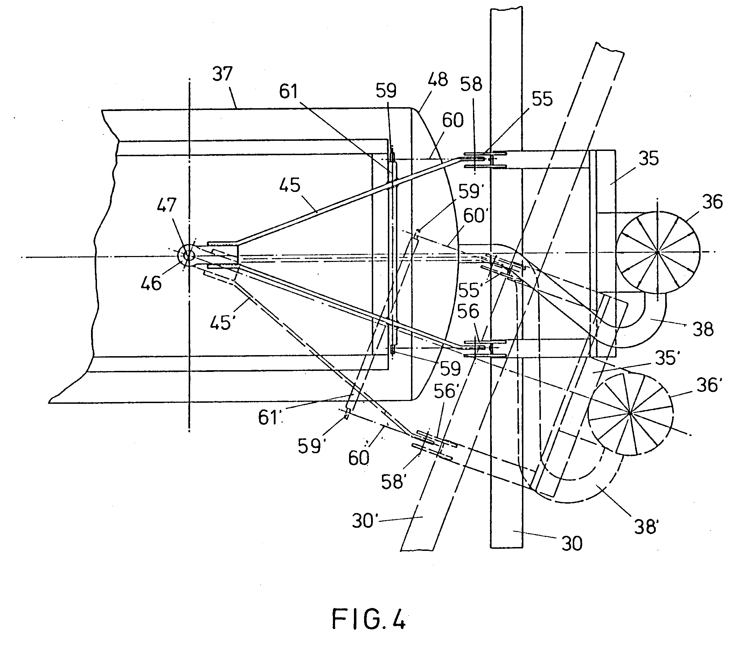

Fig. 4 zeigt schematisch die Düngervorratsbehälter-Düngereinbringvorrichtung-Kombination in der Lage beim Geradeausfahren und mit unterbrochenen Linien in der Lage beim Nehmen einer Kurve. Die zu letzterer Lage gehörenden Bezugszeichen sind mit Akzenten versehen, aber sind übrigens dieselben Bezugszeichen wie in Fig. 2 verwendet.

Auch die in Fig. 1 gezeigte Parallelogrammkonstruktion mit Einstellzylinder für jeden Hilfsrahmen ist im Ausführungsbeispiel nach Fig. 2 bis 4 weggelassen. Statt dessen ist der Hauptbalken 30 durch eine Anzahl sich in Aufwärtsrichtung erstreckender, doppelwirkender hydraulischer Zylinder mit der Oberseite des Rückschildes 48 des Behälters 37 gekuppelt. Im gezeigten Beispiel sind zwei Zylinder 50, 51 eingesetzt, die mit den oberen Enden an zwei Stützen 52, 53 befestigt sind, die mit Abstand links und rechts der Mittellängsebene 54 des Behälters am Rückschild 48 des Behälters angebracht sind. Die Befestigung ist derart, daß die Zylinder nach links und rechts und rückwärts und vorwärts schwenken können. Die Befestigung kann dazu z.B. ein Kugelgelenk enthalten.

Fig. 3 zeigt mit vollen Linien bei 50 bzw. 51 die Stellung der Zylinder beim Geradeausfahren des Behälters und der Düngereinbringvorrichtung, während mit unterbrochenen Linien bei 50' und 51' die Stellung bei einer linken Kurve angegeben ist. Mit Achsen 50'' und 51'' ist der Vollständigkeit halber noch die Stellung bei einer rechten Kurve angegeben.

Die Zylinder sind je mit dem unteren Ende an auf dem Hauptbalken 30 angeordneten Stützen 55, 56 befestigt. Auch diese Befestigung ist derart, daß die oben beschriebenen Schwenkungen möglich sind.

Die Zylinder sollen die Düngereinbringvorrichtung heben und senken und auch die Scheiben der Düngereinbringvorrichtung im Betrieb unter einer vorgegebenen Vorspannung in den Boden drücken. Dazu wird ein Druckspeicher 57 benutzt. Bevorzugt wird, wie in Fig. 3 gezeigt, für beide Zylinder 50, 51 ein einziger gemeinsamer Druckspeicher eingesetzt. Dadurch ist Torsion der Behälter-Düngereinbringvorrichtung-Kombination möglich, ohne daß die Vorspannung, mit der die Scheiben in den Boden gedrückt werden, am einen Ende des Hauptbalkens viel größer wird als am anderen Ende.

Der Zugbaum 45 ist bevorzugt um eine horizontale Achse gelenkig am Hauptbalken befestigt, wie bei 58 schematisch angegeben. Weiter ist bevorzugt zwischen mindestens einem im Abstand vom Befestigungspunkt vor dem Hauptbalken gelegenen Punkt 59 des Zugbaumes 45 und mindestens einem über der Drehachse 58 gelegenen Punkt mindestens einer Stütze eine längeneinstellbare Oberstange 60 angebracht. Die Oberstange 60 ist in Fig. 2 mit vollen Linien gezeichnet, während in der Unteransicht der Fig. 4 die Lage der Oberstangen mit Achsen bei 60 und 60' angegeben ist. In Fig. 4 ist weiter ersichtlich, daß in diesem Beispiel die Oberstangen an den Enden einer Querstange 61 des Zugbaumes befestigt sind, und daß die Stützen, an denen die Oberstangen befestigt sind, die Befestigungsstützen 55, 56 der Zylinder sind.

Mit Hilfe der Oberstange(n) kann die Kippstellung der Düngereinbringvorrichtung relativ zu den Achsen der Scheiben und damit die Stellung der Düngereinbringmittel relativ zu den durch die Scheiben gebildeten Schlitzen eingestellt werden.

Die in Fig. 2 gezeigten Düngereinbringmittel 40 umfassen ein Kolter 65 mit einem hohlen hinteren Teil 66, an das einer der Düngerzuführschläuche 39 des Verteilers 36 angeschlossen ist. Im Betrieb hält das Kolter 65 den durch die Scheibe 32 gebildeten Schlitz offen, so daß der Dünger in zweckmäßiger Weise über das hintere hohle Teil 66 in den Schlitz eingebracht werden kann.

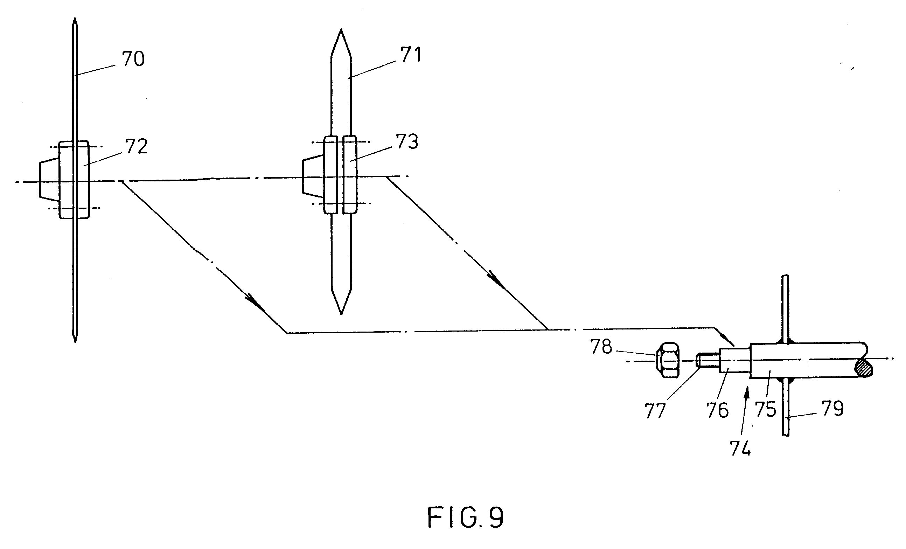

Ein derartiges Kolter eignet sich insbesondere zur Anwendung zusammen mit verhältmäßig dünnen Scheiben, wie in Fig. 9 bei 70 gezeigt. Bei bestimmten Bodenarten und/oder Witterungsverhältnissen ist jedoch der Einsatz dickerer Scheiben zu bevorzugen. Ein Beispiel einer dicken Scheibe ist schematisch bei 71 in Fig. 9 gezeigt. Es besteht daher ein Bedürfnis nach einer Düngereinbringvorrichtung, die derart ausgebildet ist, daß die Scheiben einfach und schnell auswechselbar sind. Das ist insbesondere wichtig für Lohnunternehmerbetriebe, landwirtschaftliche Genossenschaften u. dgl., deren Tätigkeiten sich über ein großes Gebiet mit verschiedenen Bodenarten erstrecken.

Gemäß der Erfindung sind die Scheiben des einen Typs einfach auswechselbar gegen Scheiben des anderen Typs. Im Beispiel nach Fig. 9 ist dies dadurch bewirkt, daß man sowohl die dünnen als auch die dicken Scheiben mit Naben 72 bzw. 73 versieht, von denen wenigstens die zentralen Bohrungen dieselben Abmessungen haben, so daß alle Naben auf ein und dieselbe Achse 74 montiert werden können. Von der in Fig. 9 gezeigten Achse ist nur ein Ende sichtbar. Das andere Ende kann in gleicher Weise ausgeführt sein, um auch eine Scheibe zu tragen. Die gezeigte Achse hat einen zentralen Teil 75, einen verjüngten Teil 76, auf den eine Nabe einer Scheibe geschoben werden kann, und einen mit Gewinde versehenen Endteil 77 zum Festsetzen einer Nabe einer Scheibe mit Hilfe einer Mutter 78. Der zentrale Teil wird von einer Achsstütze 79 getragen, die zum Hilfsrahmen 31 gehört.

Bei Anwendung einer dicken Scheibe 71 ist es nicht notwendig, ein Kolter 65 anzuwenden. Der durch eine Scheibe gebildete Schlitz ist breit genug, um den Dünger durch ein geeignetes Mundstück unmittelbar in den Schlitz einströmen zu lassen. Bevorzugt befindet dieses Mundstück sich dann aber möglichst dicht bei der Scheibe, wo der Schlitz auch bei sehr lockerem Boden noch am meisten die ursprüngliche Breite und Tiefe hat.

Bei einer Düngereinbringvorrichtung, die, wie oben beschrieben, dazu eingerichtet ist, nach Wahl mit dünnen oder dicken Scheiben ausgerüstet zu werden, müssen daher die Hilfsrahmen mit einem Schwanzstück versehen werden, das sowohl die Montage eines Kolters mit einem verhältnismäßig weit hinter der Scheibe liegenden Anschluß für einen Düngerzuführschlauch als auch die Montage eines Mundstücks für einen Düngerzuführschlauch dicht hinter der Scheibe ermöglicht.

Im Ausführungsbeispiel nach Fig. 2 ist das Schwanzstück 80 des Hilfsrahmens 31 mit einer Anzahl mit Abstand hinter der Scheibe 32 angebrachter Querbohrungen 81 versehen. Ein sich über dem vorderen Teil des Kolters 65 erstreckender Befestigungsteil 82 ist mit korrespondierenden Bohrungen oder Schlitzlöchern od. dgl. versehen, so daß das Kolter mittels in die Bohrungen 81 eingreifender Bolzen befestigt werden kann. Das hintere hohle Teil 66 des Kolters ist mit einem in Fig. 2 nicht näher gezeigten rorhförmigen Anschlußteil für einen Düngerzuführschlauch 39 versehen.

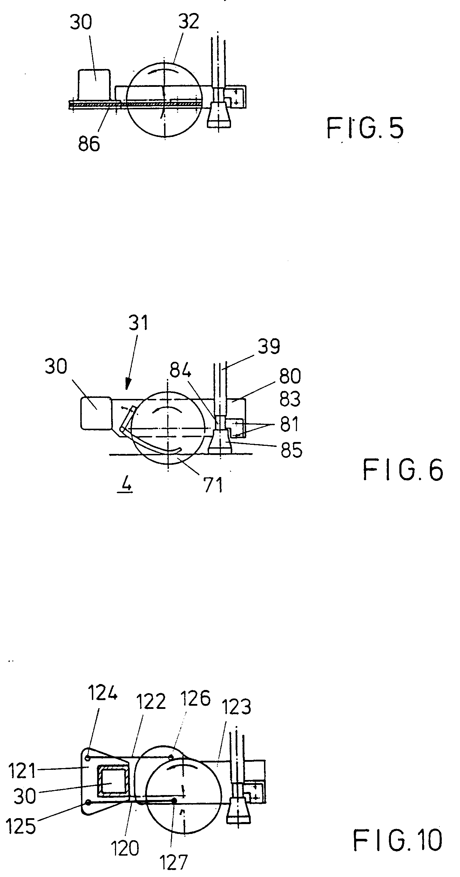

Zum Vergleich zeigt Fig. 6 die Lage, in der eine dicke Scheibe 71 montiert ist. In dieser Lage kann ein Befestigungsbügel 83 eingesetzt werden, dessen hinterer Teil mit den Bohrungen 81 korrespondierende Bohrungen oder Schlitzlöcher od. dgl. und einen in montiertem Zustand nach vorn verlaufenden Teil 84 aufweist, der den mit einem Mundstück 85 versehenen Schlauch oder Leitung 39 auf der Höhe des Übergangs oder nahe dem Übergang zwischen Schlauch und Mundstück festhält. Der Teil 84 kann in verschiedenen Weisen ausgeführt sein. Mit Vorteil kann der Teil 84 ein sich in montiertem Zustand im wesentlichen vertikal erstreckendes rohrförmiges Organ sein, auf dem an der Oberseite der Schlauch oder die Leitung 39 befestigt ist, z.B. mit Hilfe einer Schlauchklemme. Das Mundstück 85 kann in ähnlicher Weise an der Unterseite des rohrförmigen Teiles befestigt sein oder sogar ein Ganzes damit bilden. Dadurch, daß der Teil 84 sich vor den Bohrungen 81 befindet, befindet das Mundstück 85 sich in montiertem Zustand unmittelbar hinter der Scheibe, wie in Fig. 6 ersichtlich ist.

Fig. 5 zeigt eine Variante der in Fig. 2 gezeigten Vorrichtung, wobei der Hilfsrahmen im wesentlichen durch mindestens eine am Hauptbalken 30 befestigte und sich vom Hauptbalken rückwärts erstreckende Blattfeder 86 gebildet ist. Auf die Blattfeder(n) sind wieder Mittel, die die Achse mindestens einer Scheibe tragen, und Mittel zur Befestigung der Düngereinbringmittel montiert.

Durch die Wirkung der Blattfedern wird die Schlitztiefe auch bei sehr lokalen Variationen des Geländeniveaus nach Möglichkeit konstant gehalten.

Es wird bemerkt, daß die Schwanzstücke der Hilfsrahmen nach Fig. 2 bis 6 noch mit Befestigungsmitteln für Räder oder Rollen od. dgl. versehen sein können, die die durch die Scheiben gebildeten Schlitze zudrücken können.

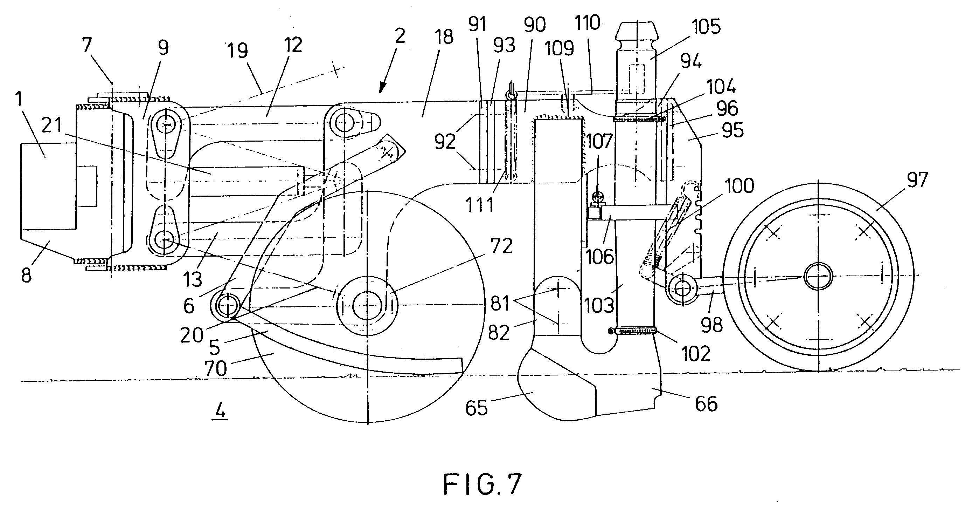

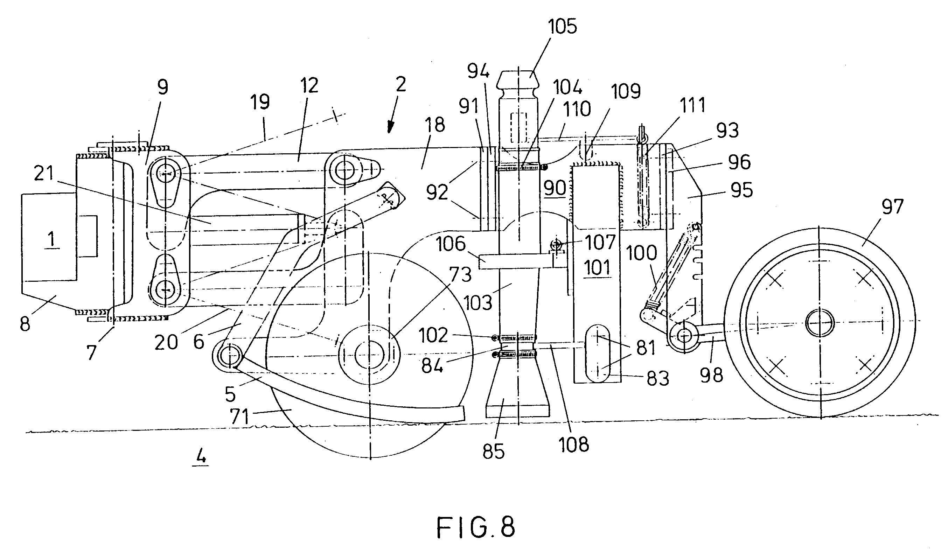

Fig. 7 und 8 zeigen schematisch als Beispiel eine Variante der oben beschriebenen Vorrichtung, bei der lösbare Schwanzstücke vorgesehen sind, die je nach dem eingesetzten Scheibentyp in einer ersten oder einer zweiten Stellung am Hilfsrahmen montiert werden können. Zur Erläuterung der universellen Einsetzbarkeit der Konstruktion mit auswechselbaren Scheiben und daran angepaßten Düngereinbringmitteln ist im Ausführungsbeispiel nach Fig. 7 und 8 von einem Hilfsrahmen des bekannten Typs mit einer Parallelogrammkonstruktion ausgegangen. In Fig. 7 und 8 sind für entsprechende Teile dieselben Bezugszeichen verwendet wie in den anderen Figuren. Da die Figuren 7 und 8 keine Blattfedern zeigen, stellen diese Figuren in diesem Sinne kein Ausführungsbeispiel der Erfindung dar.

Fig. 7 und 8 zeigen schematisch in Seitenansicht einen Hilfsrahmen 2 mit einem Scheibenträger 18. In der Lage nach Fig. 7 ist eine dünne Scheibe 70 montiert, während in der Lage nach Fig. 8 eine dicke Scheibe 71 montiert ist. Das hintere Ende des Scheibenträgers 18 ist mit Befestigungsmitteln für ein lösbares Schwanzstück 90 versehen. Die Befestigungsmittel können in einfacher Weise aus Bohrungen im Scheibenträger 18 bestehen, welche Bohrungen mit korrespondierenden Öffnungen in einem oder mehreren sich längs des Scheibenträgers erstreckenden Teilen des Schwanzstücks gefluchtet werden können.

Im gezeigten Beispiel ist der Scheibenträger mit einem sich quer zu seiner Längsrichtung erstreckenden Flansch 91 versehen. Der Flansch kann sich auswärts und/oder einwärts erstrecken und kann z.B. eine Verbindungsplatte zwischen zwei paralellen Platten bilden, die zusammen einen Träger für eine oder mehrere Scheiben bilden.

Der Flansch 91 ist mit Bohrungen 92 versehen, die mit Öffnungen in einem entsprechenden Flansch 93 des Schwanzstücks korrespondieren. Das Schwanzstück 90 ist an dem vom Flansch 93 abgewandten Ende mit einem zweiten Flansch 94 versehen, der ebenfalls mit Öffnungen versehen ist, die mit den Bohrungen 92 korrespondieren. Das Schwanzstück ist daher in zwei Stellungen montierbar, und zwar mit dem Flansch 93 an dem Flansch 91 anliegend oder mit dem Flansch 94 an dem Flansch 91 anliegend. Die zweite Stellung ist in Fig. 8 gezeigt.

In Fig. 7 und 8 ist ersichtlich, daß das Schwanzstück derart ausgeführt ist, daß in beiden Stellungen des Schwanzstücks an seiner Rückseite ein Radträger 95 montiert werden kann. Im gezeigten Beispiel weist der Radträger einen in montiertem Zustand an dem hinteren Flansch des Schwanzstücks anliegenden Flansch 96 auf, der wieder mit Öffnungen versehen ist, die mit Öffnungen im betreffenden Flansch des Schwanzstücks korrespondieren. Der Radträger trägt ein oder mehrere Räder oder Rollen 97 od. dgl., die im gezeigten Beispiel an einem Radtragarm 98 gelagert sind und die den mit Dünger versehenen Schlitz zudrücken können. Der Radtragarm ist bevorzugt gelenkig um eine im wesentlichen horizontale Querachse 99 am Radträger befestigt und wird durch Federspannung einer verstellbaren Feder 100 gegen den Boden gedrückt.

Das gezeigte Schwanzstück ist mit einem im wesentlichen vertikalen Streifen 101 versehen, der nahe dem unteren Ende mit den Bohrungen 81 versehen ist. In einer ersten Stellung (Fig. 7) des Schwanzstücks liegt der Streifen verhältnismäßig dicht bei der Scheibe und ist der Befestigungsteil 82 eines Kolters 65 mit in die Bohrungen 81 eingreifenden Bolzen befestigt. An dem hinteren hohlen Teil 66 des Kolters ist in diesem Beispiel mittels einer Schlauchklemme 102 ein aufwärts verlaufender elastischer Rohr- oder Schlauchabschnitt 101 befestigt, der nahe dem oberen Ende des Schwanzstücks wieder mittels einer Schlauchklemme 104 an einem Anschlußstück 105 für einen in Fig. 7 nicht gezeigten Düngerzuführschlauch 39 befestigt ist.

Der elastische Rohr- oder Schlauchabschnitt 103 kann mit Hilfe einer Klemmbacke 106, von der nur ein Teil ersichtlich ist, und die durch einen hydraulischen Zylinder 107 betätigbar ist, zusammengekniffen werden. Hierdurch wird ein Lecken des Düngers verhindert, wenn die Vorrichtung nicht (mehr) im Betrieb ist und z.B. über die öffentliche Straße befördert wird. Die Klemmbacke 106 ist zusammen mit dem Zylinder 107 an dem vertikalen Streifen befestigt und verläuft in Fig. 7 rückwärts.

In der zweiten Stellung des Schwanzstücks (Fig. 8) liegt der vertikale Streifen 101 verhältnismäßig weit hinter der (dicken) Scheibe 71. Mittels in die Bohrungen 81 eingreifender Bolzen ist nun ein Befestigungsbügel 83 mit einem nach vorn verlaufenden Arm 108 montiert, der mit einem rohrförmigen Teil 84 versehen ist, auf dem wieder mit Hilfe einer Schlauchklemme 102 der elastische Rohr- oder Schlauchabschnitt 103 befestigt ist. An der Unterseite des rohrförmigen Teiles ist das sich in der Bewegungsrichtung gesehen erweiternde und sich in Breitenrichtung verjüngende Mundstück 85 befestigt, das im Betrieb bevorzugt frei vom Bodem 4 bleibt.

Auf die bereits beschriebene Weise kann der elastische Rohr- oder Schlauchabschnitt 103 wieder mit der jetzt nach vorn verlaufenden Klemmbacke 106 zusammengekniffen werden.

Da das Zusammenkneifen des elastischen Rohr- oder Schlauchabschnitts diesen zugleich verkürzen läßt, ist das Anschlußstück 105 einigermaßen auf und nieder bewegbar montiert. Im gezeigten Beispiel ist das Anschlußstück 105 an dem einen Ende eines um eine Achse 109 gelenkig montierten Armes 110 befestigt, dessen anderes Ende durch eine Zugfeder 111 heruntergezogen wird. Beim Zusammenkneifen des elastischen Rohr- oder Schlauchabschnitts kann das Anschlußstück sich daher entgegen der Federspannung der Feder 111 etwas nach unten bewegen.

Infolge der beschriebenen Konstruktion kann eine Düngereinbringvorrichtung gemäß der Erfindung verhältnismäßig einfach und schnell für eine andere Bodenart geeignet gemacht werden. Hierzu werden die Scheiben gegen andere Scheiben ausgewechselt, und zwar dadurch, daß man die Mutter 78 losdreht oder die Scheibe von der Nabe löst, eine andere Scheibe anbringt und die Mutter wieder festsetzt. Danach werden die Schwanzstücke 90 gelöst und umgekehrt wieder festgesetzt. Auch werden die in die Bohrungen 81 eingreifenden Bolzen sowie die Schlauchklemme 102 gelöst und wird entweder die Stütze 83 mit dem Mundstück 85 oder das Kolter 65 montiert.

Es wird bemerkt, daß ein Hilfsrahmen mit Vorteil dazu eingerichtet sein kann, zwei Scheiben zu tragen. Das Schwanzstück trägt dann bevorzugt auch zwei Anschlußstücke 105 und die zugehörigen elastischen Schlauch- und Rohrabschnitte sowie zwei gemeinsam betätigbare Klemmbacken. Beim Umkehren eines solchen Schwanzstücks brauchen die Düngerzuführschläuche und auch der hydraulische Schlauch für die Speisung des Betätigungszylinders der Klemmbacke(n) nicht gelöst zu werden.

Es wird bemerkt, daß nach dem Vorstehenden unterschiedliche Abwandlungen dem Fachmann naheliegen. So könnte z.B. ein mehr als eine Scheibe tragender Hilfsrahmen oder ein Schwanzstück dafür mit einem gemeinsamen Anschluß für einen Düngerzuführschlauch 39 und mit einem Verteiler zum Verteilen des zugeführten Düngers über die durch die Scheiben des Hilfsrahmens gebildeten Schlitze versehen sein. Auch könnte dann ein gemeinsamer zusammenkneifbarer Leitungsabschnitt 103 eingesetzt werden.

Auch könnte die Düngereinbringvorrichtung unmittelbar an einen Schlepper gekuppelt sein, der auch den Düngervorratsbehälter trägt. Als Alternative könnte der Düngervorratsbehälter hinter die Düngereinbringvorrichtung gekuppelt sein.

Weiter könnte eine Düngereinbringvorrichtung gemäß der Erfindung auf Wunsch mit einem eigenen Laufradsatz ausgestattet sein. Auch können auf Wunsch die eine oder mehrere Blattfedern umfassenden Hilfsrahmen noch mit einzelnen Vorspannzylindern versehen sein, die die Scheiben in den Boden drücken. Bei den nicht mit Blattfedern versehenen Hilfsrahmen kann derselbe Effekt dadurch erreicht werden, daß man diese mit Vorspannzylindern versieht und gelenkig um eine im wesentlichen horizontale Achse montiert.

Fig. 10 zeigt schematisch eine nähere Ausarbeitung der in Fig. 5 gezeigten Ausführungsform mit einer oder mehreren Blattfedern. Im Beispiel nach Fig. 10 ist an der Unterseite des Hauptbalkens 30 eine rückwärts verlaufende Blattfeder oder Blattfederpaket 120 gezeigt, das in diesem Beispiel an einer Stütze 121 befestigt ist. Weiter ist eine zweite Blattfeder oder Blattfederpaket 122 verwendet, das sich an der Oberseite des Hauptbalkens befindet und ebenfalls rückwärts verläuft. Die Blattfedern 120 und 122 sind im wesentlichen gleich lang und tragen mit den freien Enden einen Scheibenträger 123, dessen hinteres Ende wieder auf eine der oben beschriebenen Weisen ausgeführt sein kann. Es wird bemerkt, daß die Blattfederkonstruktion auf Wunsch auch als Ersatz der Parallelogrammkonstruktion der bekannten Technik dienen kann, gegebenenfalls unter Beibehaltung der Drehungsmöglichkeit relativ zur Achse 7 nach Fig. 1 und gegebenenfalls in Kombination mit auswechselbaren Scheiben und Düngereinbringmitteln. Der Vorteil einer Parallelogrammkonstruktion ist, daß die Düngereinbringmittel immer in gleicher Weise gegen den Boden gerichtet bleiben, da die Parallelogrammkonstruktion nur eine Bewegung der Düngereinbringmittel parallel zu sich selbst gestattet.

Die beiden Blattfedern oder Blattfederpakete 120, 122 haben zwei Befestigungspunkte 124, 125 auf dem Gestell und zwei Befestigungspunkte 126, 127 auf dem Scheibenträger 123. Mindestens einer dieser Befestigungspunkte, die die Eckpunkte eines Parallelogramms bilden, bildet eine feste Befestigung. Bevorzugt ist dies ein Befestigungspunkt auf dem Gestell. Im gezeigten Beispiel bildet der Befestigungspunkt 125, wo die untere Blattfeder an dem Gestell befestigt ist, eine feste Befestigung. Im gezeigten Beispiel bildet auch der diagonalwärts dem Punkt 125 gegenüberliegende Befestigungspunkt 126 eine feste Befestigung und gestatten die beiden anderen Befestigungspunkte 124 und 127 eine Drehung um eine horizontale Achse. Als Alternative könnten beispielsweise auch die Befestigungspunkte 124 und 125 eine feste Befestigung bilden. Auf Wunsch kann eine der Blattfeder(pakete) durch eine Stange od. dgl. ersetzt werden, die dann an beiden Enden gelenkig befestigt ist.

Diese und ähnliche Abwandlungen dürften den Rahmen der Erfindung nicht übersteigen, wie er durch die Ansprüche definiert ist.

## Patentansprüche

1. Vorrichtung zum Einbringen von Flüssigdünger in den Boden, versehen mit einem Gestell (30, 31), das eine Anzahl im wesenlichen parallel angeordneter Scheiben (32) umfasst, die im Betrieb Schlitze im Boden bilden, sowie hinter jede Scheibe (32) montierte Düngereinbringmittel (40), die im Betrieb Flüssigdünger in die durch die Scheiben (32) gebildeten Schlitze einbringen, wobei das Gestell eine Anzahl, sich im wesentlichen parallel zueinander rückwärts erstreckender Hilfsrahmen (31) trägt, die je mindestens eine Scheibe (32) und dahinten montierten Düngereinbringmittel (40) tragen, dadurch gekennzeichnet, dass die Hilfsrahmen (31) im wesentlichen aus einer oder mehreren sich vom Gestell rückwärts erstreckenden Blattfedern (86; 120, 122) bestehen, auf die Mittel zum Befestigen einer oder mehrerer Scheiben (32) und Düngereinbringmittel (40) montiert sind.

2. Vorrichtung nach Anspruch 1, gekennzeichnet durch zwei Sätze (120, 122) je mindestens einer Blattfeder, die im wesentlichen gleich lang sind und die in vertikalem Abstand voreinander am Gestell (30, 31) befestigt sind, wobei die hinteren Enden der beiden Sätze in vertikalem Abstand voneinander mit einem Scheibenträger (123) verbunden sind.

3. Vorrichtung nach Anspruch 2, dadurch gekennzeichnet, dass einer der Sätze (120, 122) mindestens einer Blattfeder durch ein nicht-federndes Verbindungselement ersetzt ist, dessen beide Enden gelenkig zu einer horizontalen Achse (124, 125; 126, 127) am Gestell (30, 31) bzw. Scheibenträger (123) befestigt sind.

4. Vorrichtung nach einem der vorhergehenden Ansprüche, dadurch gekennzeichnet, dass die Scheiben (32) derart montiert sind, dass diese leicht auswechselbar gegen Scheiben eines anderen Typs sind und dass die Schwanzstücke der Hilfsrahmen (31) mit Befestigungsmitteln versehen sind, die zur Montage von an jeden montierten Scheibentyp (70, 71) angepassten Düngereinbringmitteln dienen können.

5. Vorrichtung nach einem der vorhergehenden Ansprüche, dadurch gekennzeichnet, dass ein an eine Zugmaschine kuppelbare Zugbaum (45) um eine horizontale Achse (58) gelenkig mit dem Gestell (30, 31) verbunden ist und dass zwischen einem im Abstand vom Gestell liegenden Teil des Zugbaumes und mindestens einer auf dem Gestell angeordneten Stütze (55, 56) mindestens eine längeneinstellbare Oberstange (60) montiert ist.

6. Vorrichtung nach einem der vorhergehenden Ansprüche, dadurch gekennzeichnet, dass das Gestell (30, 31) mit mindestens einer Stütze (55, 56) versehen ist, an der gelenkig in der Fortbewegungsrichtung und seitlich schwenkbar ein sich im wesentlichen aufwärts erstreckender hydraulischer Zylinder (50, 51) befestigt ist, dessen anderes Ende im Betrieb ebenfalls gelenkig und schwenkbar mit einer höher liegenden Stütze (52, 53) der Zugmaschine verbunden ist.

7. Vorrichtung nach Anspruch 6, dadurch gekennzeichnet, dass mit dem Gestell (30, 31) zwei, quer zur Fortbewegungsrichtung gesehen, im Abstand voneinander befindliche und sich aufwärts erstreckende hydraulische Zylinder (50, 51) verbunden sind, die mit einem gemeinsamen Druckspeicher (57) versehen sind.

8. Vorrichtung nach einem der vorhergehenden Ansprüche 5-7, dadurch gekennzeichnet, dass die Zugmaschine ein mit mindestens einem Radsatz (43) versehener Düngervorratsbehälter (37) mit einem mit einem Kupplungsorgan (47) für den Zugbaum (45) versehenen Untergestell (44) ist, welches Untergestell (44) wieder mit an einen Schlepper kuppelbaren Organen versehen ist.

9. Vorrichtung nach einem der vorhergehenden Ansprüche, dadurch gekennzeichnet, dass die Hilfsrahmen (31) relativ zu einer vertikalen Achse drehfest mit einem sich quer zur Fortbewegungsrichtung erstreckende Hauptbalken (30) des Gestells verbunden sind.

10. Kombination eines mit mindestens einem Radsatz (43) versehenen Düngervorratsbehälters (37) mit einer Vorrichtung nach einem der vorhergehenden Ansprüche, dadurch gekennzeichnet, dass der Düngervorratsbehälter (37) ein Untergestell (44) aufweist, das mit einem Kupplungsorgan (47) versehen ist, mit dem im Betrieb der Zugbaum (45) der Düngereinbringvorrichtung gekuppelt ist; und dass der Düngervorratsbehälter (37) an der Rückseite nahe der Oberseite des Behälters (37) mit Stützen (52, 53) zum schwenkbaren Befestigen von zwischen den genannten Stützen und korrespondierenden Stützen (55, 56) auf dem Gestell der Düngereinbringvorrichtung montierten hydraulischen Zylindern (50, 51) versehen ist.

## Claims

1. A device for injecting liquid manure into the soil, provided with a frame (30, 31) comprising a plurality of substantially parallel discs (32), which, in use, form cuts in the soil, and manure injection means (40) mounted behind each disc (32), which, in use, inject liquid manure into the cuts formed by the discs (32), which frame carries a plurality of substantially parallel subframes (31) extending backwards, each carrying at least one disc (32) and manure injection means (40) mounted behind them, characterized in that the subframes (31) are substantially composed of one or more leaf springs (86; 120, 122) extending backwards from the frame and having mounted thereon means for fastening one or more discs (32) and manure injection means (40).

2. A device according to claim 1, characterized by two sets (120, 122) of each at least one leaf spring, which are substantially equal in length, and which, vertically spaced apart, are fastened to the frame (30, 31), the back ends of said two sets, vertically spaced apart, being connected to a disc carrier (123).

3. A device according to claim 2, characterized in that one of the sets (120, 122) of at least one leaf spring is replaced by a non-resilient connecting element, the two ends of which being fastened the frame (30, 31) or disc carrier (123) for pivoting on the horizontal axis (124, 125; 126, 127).

4. A device according to any of the preceding claims, characterized in that the discs (32) are mounted in such a way that it is easy to replace them by discs of another type, and that the tail pieces of the subframes (31) are provided with fastening means suitable for mounting manure injection means adapted to each mounted disc type (70, 71).

5. A device according to any of the preceding claims, characterized in that a drawbar (45) for coupling to a tractor is fastened to the frame (30, 31) for pivoting on a horizontal ;xis (58), and that at least one length-adjustable upper bar (60) is mounted between a portion of the drawbar remote from the frame and at least one support (55, 56) disposed on the frame.

6. A device according to any of the preceding claims, characterized in that the frame (30, 31) is provided with at least one support (55, 56) to which a substantially upwardly extending hydraulic cylinder (50, 51) is fastened for pivoting in the direction of movement and swivelling laterally, the other end of said cylinder (50, 51), in use, likewise being connected to an elevated support (52, 53) of the tractor for pivoting and swivelling.

7. A device according claim 6, characterized in that two hydraulic cylinders (50, 51), which, viewed transversely to the direction of movement, are spaced apart and extend upwardly, are connected to the frame (30, 31), said hydraulic cylinders (50, 51) being provided with a common pressure accumulator (57).

8. A device according to any of the preceding claims 5-7, characterized in that the tractor is a manure storage tank (37) provided with at least one set of wheels (43) and having an underframe (44) provided with a coupling member (47) for the drawbar (45), said underframe (44) being provided with members for coupling to a tractor.

9. A device according to any of the preceding claims, characterized in that the subframes (31) are connected to a main beam (30) of the frame extending transversely to the direction of movement, so as to be incapable of pivoting on a vertical axis.

10. A combination of a manure storage tank (37), provided with at least one set of wheels (43), with a device according to any of the preceding claims, characterized in that the manure storage tank (37) has an underframe (44), provided with a coupling member (47), with which, in use, the drawbar (45) of the manure injection device is coupled; and that the manure storage tank (37) is provided at the back near the upper side of the tank (37) with supports (52, 53) for swivel-mounting hydraulic cylinders (50, 51) mounted between said supports and corresponding supports (55, 56) on the frame of the manure injection device.

## Revendications

1. Dispositif destiné à enfouir de l'engrais liquide dans le sol, pourvu d'un châssis (30, 31) qui comprend un certain nombre de disques (32) disposés sensiblement de manière parallèle les uns aux autres et formant, en fonctionnement, des fentes dans le sol, ainsi que de moyens d'enfouissement d'engrais (40), qui sont montés derrière chaque disque (32) et qui, en fonctionnement, enfouissent de l'engrais liquide dans les fentes formées par les disques (32), le châssis portant un certain nombre de cadres auxiliaires (31), qui s'étendent vers l'arrière, sensiblement de manière parallèle les uns aux autres, et qui portent chacun au moins un disque (32) et des moyens d'enfouissement d'engrais (40) montés derrière ce disque, caractérisé en ce que les cadres auxiliaires (31) sont constitués essentiellement par une ou plusieurs lames de ressort (80; 120, 122) s'étendant vers l'arrière à partir du châssis, et sur lesquelles sont montés des moyens destinés à fixer un ou plusieurs disques (32) et des moyens d'enfouissement d'engrais (40).

2. Dispositif selon la revendication 1, caractérisé par deux jeux (120, 122) chacun d'au moins une lame de ressort, qui sont d'une longueur sensiblement identique et qui sont fixés au châssis (30, 31) à distance verticale l'un de l'autre, les extrémités arrière des deux jeux étant reliées l'une à l'autre à distance verticale l'une de l'autre, par un support de disque (123).

3. Dispositif selon la revendication 2, caractérisé en ce que l'un des jeux (120, 122) d'au moins une lame de ressort, est remplacé par un élément de liaison non élastique, dont les deux extrémités sont fixées de manière articulée autour d'un axe horizontal (124, 125; 126, 127) respectivement sur le châssis (30, 31) et le support de disque (123).

4. Dispositif selon l'une des revendications précédentes, caractérisé en ce que les disques (32) sont montés de manière à pouvoir être remplacés aisément par des disques d'un autre type, et en ce que les parties de queue des cadres auxiliaires (31) sont pourvues de moyens de fixation pouvant servir au montage de moyens d'enfouissement d'engrais adaptés à chaque type de disque (74, 71) monté.

5. Dispositif selon l'une des revendications précédentes, caractérisé en ce qu'un timon de traction (45) pouvant être couplé à un véhicule tracteur est relié au châssis (30, 31) de manière articulée autour d'un axe horizontal (58), et en ce qu'entre une partie du timon de traction située à distance du châssis et au moins un support (55, 56) disposé sur le châssis, est monté au moins un tirant supérieur (60) de longueur réglable.

6. Dispositif selon l'une des revendications précédentes, caractérisé en ce que le châssis (30, 31) est pourvu d'au moins un support (55, 56) auquel est fixé de manière articulée dans la direction du mouvement d'avance et de manière à pouvoir pivoter latéralement, un vérin hydraulique (50, 51) s'étendant sensiblement vers le haut, et dont l'autre extrémité, en fonctionnement, est reliée également de manière articulée et pivotante, à un support (52, 53) du véhicule tracteur, situé plus haut.

7. Dispositif selon la revendication 6, caractérisé en ce qu'au châssis (30, 31) sont reliés des vérins hydrauliques (50, 51), qui sont espacés l'un de l'autre dans la direction transversale à la direction du mouvement d'avance, qui s'étendent vers le haut, et qui sont pourvus d'un accumulateur de pression (57) commun.

8. Dispositif selon l'une des revendications précédentes 5 - 7, caractérisé en ce que le véhicule tracteur est un réservoir d'engrais (37) muni d'au moins une paire de roues (43) et comportant un châssis inférieur (44) pourvu d'un organe d'attelage (47) pour le timon de traction (45), ce châssis inférieur (44) étant pour sa part muni d'organes susceptibles d'être attelés à un tracteur.

9. Dispositif selon l'une des revendications précédentes, caractérisé en ce que les cadres auxiliaires (31) sont reliés, de manière fixe en rotation relativement à un axe vertical, à une poutre principale (30) du châssis, qui s'étend transversalement à la direction du mouvement d'avance.

10. Combinaison d'un réservoir d'engrais (37) pourvu d'au moins une paire de roues (43), avec un dispositif selon l'une des revendications précédentes, caractérisé en ce que le réservoir d'engrais (37) comprend un châssis inférieur (44) pourvu d'un organe d'attelage (47) auquel est attelé, en fonctionnement, le timon de traction (45) du dispositif d'enfouissement d'engrais, et en ce que le réservoir d'engrais (37) est pourvu sur le côté arrière, à proximité du côté supérieur du réservoir (37), de supports (52, 53) destinés à la fixation pivotante de vérins hydrauliques (50, 51) montés entre les supports cités et des supports correspondants (55, 56) sur le châssis du dispositif d'enfouissement d'engrais.
